# EUROPÄISCHE PATENTSCHRIFT

(11) **EP 1 754 745 B1**
(45) Veröffentlichungstag und Bekanntmachung des Hinweises auf die Patenterteilung: **06.10.2010**
(21) Anmeldenummer: 06117911.5
(22) Anmeldetag: 26.07.2006
(51) Int. Cl.: C08J 9/36

(54) **Schaumstoffplatte mit verringertem Verzug bei Wärmeeinstrahlung**
Foamed panel with reduced surface distortion under heat radiation
Panneau de mousse à distortion de surface réduite sous radiation de chaleur

(30) Priorität: 17.08.2005 DE 102005039159
(43) Veröffentlichungstag der Anmeldung: 21.02.2007
(73) Patentinhaber: BASF SE, 67056 Ludwigshafen (DE)
(72) Erfinder: Alteheld, Armin, 55543, Bad Kreuznach (DE); Ehrenstein, Moritz, 67063, Ludwigshafen (DE); Hahn, Klaus, 67281, Kirchheim (DE); Turznik, Gerhard, 67269, Grünstadt (DE)

(56) Entgegenhaltungen:
- JP-A- 9 226 081
- US-A- 3 598 642
- US-A- 4 128 695

## Beschreibung

Die Erfindung betrifft Schaumstoffplatten mit einer Beschichtung auf mindestens einer Plattenoberfläche wobei die Beschichtung 5 bis 30 Gew.-% Pigmente mit hohem Streu- und/oder Reflexionsvermögen enthält, sowie ein Verfahren zur deren Herstellung durch Auftragen und Abtrocknen einer Pigment-haltigen Polymerdispersion.

In der Regel haben Schaumstoffplatten, insbesondere Platten mit Schäumhaut, keinen ausreichenden Haftverbund mit mineralischen Baustoffen. Aus diesem Grund werden beispielsweise extrudierte Polystyrol-Hartschaumstoffe (XPS) nachträglich mit z. B. einem Waffelmuster geprägt. Diese Nachbearbeitung ist jedoch aufwendig und führt zu zusätzlichen Kosten. Die Platten sind auch nicht im Sichtbereich einsetzbar und eigenen sich somit nur für den Vorputz.

Die EP-A 1 566 400 beschreibt Schaumstoffplatten mit einer Beschichtung zur Haftung von Mörtel- Beton- und Putzsystemen. Die Beschichtung besteht aus einem Polymerfilm, der eine Glasübergangstemperatur im Bereich von -60 bis + 40°C aufweist.

Beim Einsatz an Gebäudefassaden können sich Schaumstoffplatten, insbesondere wenn sie eingefärbt oder zur Verringerung der Wärmeleitfähigkeit mit IRabsorbierenden Pigmenten versehen sind, durch Wärmeeinstrahlung verziehen und sich von der Wand ablösen.

Aufgabe der vorliegenden Erfindung war es, den genannten Nachteilen abzuhelfen und eine Schaumstoffplatte sowie eine einfaches und kostengünstiges Verfahren zu deren Herstellung bereitzustellen, die ohne Prägung eine verbesserte Haftung zu Mörtel-, Beton- und Putzsystemen aufweist und sich insbesondere bei Wärmeeinstrahlung nicht oder nur geringfügig verziehen.

Demgemäss wurde eine Schaumstoffplatte mit einer Beschichtung auf mindestens einer Plattenoberfläche gefunden, wobei die Beschichtung eine Schichtdicke im Bereich von 1 bis 100 µm und einen Polymerfilm aus Styrod-Acrylaten oder Styrolbutadien-Copolymeren mit einem Styrolgehalt im Bereich von 10 bis 90 Gew-% aufweist, sowie 5 bis 30 Gew.%, bezogen auf die Beschichtung, Pigmente mit hohem Streu- und/oder Reflexionsvermögen und einer mittleren Teilchengröße im Bereich von 0,1 bis 50 µm enthält.

Als Pigmente mit hohem Streu- und/oder Reflexionsvermögen werden Titandioxid, wie Rutil, Anatas und Mikrotitandioxide, Zinksulfid, Zinkoxid, Antimontrioxid, Bleicarbonat, Bleisulfat, Lithophone, Zirkoniumdioxid, Calciumcarbonat, Talkum, Bariumsulfat, Strontiumsulfat, Kaoline, Glaspartikel, Glasperlen, Silikate oder Mischungen davon eingesetzt.

Des weiteren können auch organische Hohlteilchen als Pigmente eingesetzt werden. Organische Hohlteilchen sind eine besondere Art von Kern-Schale-Partikel, die in getrockneter Form aus einem luftgefüllten Hohlraum, umgeben von einer harten Hülle bestehen. Aufgrund des Brechungsunterschiedes zwischen Hülle und luftgefülltem Hohlraum haben sie die besondere Eigenschaft, Licht zu streuen.

Es werden 5 bis 30 Gew.-% Pigmente mit einer mittleren Teilchengröße im Bereich von 0,1 µm bis 50 µm, bevorzugt im Bereich von 0,32 bis 0,45 µm eingesetzt.

Bevorzugt werden Weißpigmente mit einem Weißgrad/Helligkeit (DIN/ISO) von 50 bis 100%, insbesondere von 70 -98%. Unter Weißpigmenten werden anorganische Pigmente verstanden, deren opt. Wirkung vorwiegend auf nicht selektiver Lichtstreuung beruht (DIN 55944: 1990-04). Sie zeigen keine Absorption im Bereich des sichtbaren Lichtes, dafür hohes Streuvermögen, das hohes Deckvermögen zur Folge hat. Das Streuvermögen ist umso größer, je größer die Differenz zwischen der Brechzahl des Weißpigmentes und der des umgebenden Mediums ist.

Die Pigmente mit hohem Streu- und/oder Reflexionsvermögen können vorteilhaft als Pigmentdispersion eingesetzt werden. Die Pigmentdispersion kann weitere Komponenten beinhalten, die beispielsweise eine Verminderung der Absetzneigung, eine Steuerung der Viskosität, eine bessere Dispergierbarkeit der Pigmente oder eine Verbesserung der Benetzung ermöglichen. Beispiele für Verdickungsmittel sind Kieselsäuren, Schichtsilikate, Metallseifen, gehärtetes Ricinusöl, modifizierte Fett-Derivate, Polyamide, modifizierte Cellulosederivate, Polyvinylalkohole, Polyacryl- u. Polymethacrylsäuren sowie deren Salze, Polyacrylamide, Polyvinylpyrrolidon, Polyethylenglykole, Poly(hydroxyethyl)acrylate, Poly(hydroxyethyl)methacrylate, Styrol-Maleinsäureanhydrid-Copolymerisate sowie deren Salze. Dispergiermittel umfassen u.a. Bentonit, Magnesiumaluminiumsilikate, Polyvinylpyrrolidon und weitere teilweise bei den Verdickungsmitteln genannte Substanzen. Die Dispersion kann Bindemittel natürlichen oder synthetischen Ursprungs beinhalten. Als Bindemittel können beispielsweise Epoxidharze, Alkydharze, Acrylharze, Melamin/Formaldehyd-Harze, Phenol/Formaldehyd-Harze, Harnstoff/Formaldehyd-Harze, Kolophonium oder weitere Harze und Wachse, Caseinderivate, Stärke, Cellulosederivate, Polyacrylate, Polymethacrylate, Polyvinylverbindungen, Polyurethane, Polyether oder Polyester und Copolymere eingesetzt werden. Mögliche Bindemittel sind auch anorganische Substanzen, wie Kalk, Weißzement u. Kaliwasserglas oder Calciumhydroxid. Der Feststoffanteil von Weißpigmentdispersionen auf Basis von Titandioxid liegt üblicherweise zwischen 40-80 Gew.-%.

Zur Verbesserung der Haftung der beschichteten Schaumstoffplatten auf Mörtel-, Beton- und Putzsystemen kann die Oberfläche der Beschichtung zusätzlich zu den Pigmenten mit hohem Streu- und/oder Reflexionsvermögen Füllstoffe mit einer Partikelgröße von mindestens 50 µm, bevorzugt im Bereich von 100 µm bis 1000 µm, bei 5 bis 20 Gew.-%, bezogen auf die Beschichtung, enthalten. Damit der Gesamtanteil der Füllstoffe in der Beschichtung nicht zu hoch ist, werden zur Herstellung der Beschichtung Füllstoffe eingesetzt, bei denen mindestens 95%, bevorzugt mindestens 99% eine Teilchengröße im Bereich von 10 µm bis 1000 µm, bevorzugt im Bereich von 50 µm bis 500 µm aufweisen.

Als Füllstoffe kommen alle organischen oder anorganischen Feststoffe in Betracht, die die entsprechende Teilchengröße aufweisen oder durch Vermahlung mit entsprechender Teilchengröße erhältlich sind.

Bevorzugte Füllstoffe sind anorganische Feststoffe, wie Aluminiumsilikate, Quarz, gefällte oder pyrogene Kieselsäure, Leicht- und Schwerspat, Talkum, Dolomit oder Calciumcarbonat, Borate, partikelförmige Mörtelbestandteile, Farbpigmente, wie Titanweiß, Bleiweiß, Zinkweiß, Lithophone und Antimonweiß, Eisenoxidschwarz, Manganschwarz, Cobaltschwarz, Antimonschwarz, Chromgelb, Mennige, Zinkgelb, Zinkgrün, Pinkrot, Cadmiumrot, Cobaltblau, Berliner Blau, Ultramarin, Manganviolett, Cadmiumgelb, Molybdatorange oder Strontiumgelb, natürliche oder synthetische Fasern, wie Glas- oder Kohlenfasern, Holzmehl oder Polymerpartikel, beispielsweise aus thermoplastischen Polymeren, wie Polystyrol oder Polypropylen oder Duromeren, wie Epoxid- oder Melamin/Formaldehyd-Harzen..

Besonders bevorzugt wird ein Füllstoff verwendet, der aus dem gleichen Material wie die Schaumstoffplatte besteht und ebenfalls ein hohes Streu- und/oder Reflexionsvermögen aufweist. Auf diese Weise werden die Eigenschaften, z. B. Brandverhalten und die chemische Zusammensetzung der beschichteten Schaumstoffplatte nicht wesentlich beeinflusst. Vorteilhaft kann auch Recyclat aus dem Herstellverfahren der Schaumstoffplatteals Füllstoff eingesetzt werden. So werden beispielsweise in einer Beschichtung einer Polystyrol-Extusionsschaumplatte bevorzugt Polymerpartikel aus Polystyrol eingesetzt.

In der Regel besteht die Beschichtung aus einem Polymerfilm, der eine oder mehrere Glasübergangstemperaturen im Bereich von -60° bis + 100 °C aufweist und in dem die Füllstoffe eingebettet sind. Bevorzugt liegen die Glasübergangstemperaturen des Polymerfilmes im Bereich von -30° bis + 60°C, besonders bevorzugt im Bereich von -10° bis + 20°C. Die Glasübergangstemperatur kann mittels Differential Scanning Calorimetrie (DSC) bestimmt werden.

Die Haftzugfestigkeit zwischen einem Unterputz oder Beton und der mit der Beschichtung versehenen Plattenoberfläche der Schaumstoffplatte beträgt in der Regel mindesten 50 kPa, bevorzugt mindestens 100 kPa, besonders bevorzugt mindestens 200 kPa, gemessen nach DIN EN 1607 an Proben nach DIN EN13494.

Als Schaumstoffplatte können Partikelschaumstoffe oder Extrusionsschaumstoffe verwendet werden. Partikelschaumstoffe sind durch Versintern von Schaumpartikeln, beispielsweise aus expandiertem Polyolefinen, wie expandierbarem Polypropylen (EPP) oder vorgeschäumtem Partikeln aus expandierbarem Polystyrol (EPS) erhältlich. Bevorzugt verwendet man Schaumstoffplatten aus einem Extrusionsschaum auf Basis eines Styrolpolymeren (XPS).

Die Schaumstoffplatten haben in der Regel eine Dichte im Bereich von 10 bis 100 g/l und sind geschlossenzellig, d.h. sie weisen bevorzugt Zellen auf, die zu mindestens 90%, insbesondere zu 95 bis 100% geschlossenzellig sind. Für eine weitere Verbesserung der Haftung zu Mörtel-, Beton- und Putzsystemen können sie nach der Herstellung und vor der Beschichtung z.B. mit einem Waffelmuster geprägt und gestanzt werden.

Die Schaumstoffplatten weisen in der Regel eine Dicke im Bereich von 5 bis 500 mm, bevorzugt 10 bis 400 mm, besonders bevorzugt 15 bis 350 mm auf. Insbesondere für die Wärmedämmung in Bauanwendungen werden quaderförmige Schaumstoffplatten mit einem Querschnitt von mindestens 50 cm² eingesetzt.

Vorteilhaft können auch Schaumstoffplatten mit einer Wärmeleitfähigkeit von 0,035 W/mK (gemessen nach DIN 52612 bei 10°C) oder darunter eingesetzt werden. Diese können 0,01 bis 10 Gew.-%, bezogen auf das Polymer, eines partikelförmigen IR-Absorbers, wie Ruß, Metallpulver, z. B. Aluminiumpulver und Titandioxid, bevorzugt Graphit mit einer mittleren Partikelgröße von 1 bis 100 µm enthalten.

Besonders bevorzugt werden unter Verwendung halogenfreier Treibmittel hergestellte, gleichmäßige, geschlossenzellige und formstabile extrudierte Polystyrolschaumstoffkörper (XPS) aus einer Polystyrol-Thermoplastikmatrix mit einem mittleren Molekulargewicht M_{w} zwischen 175 000 und 500 000 g/mol und einer Uneinheitlichkeit M_{w}/Mₙ von größer als 1,5, wie sie in der EP-A-0 802 220 beschrieben sind. Sie weisen in der Regel eine Druckfestigkeit, gemessen nach DIN EN 826 im Bereich von 0,2 bis 1,0 N/mm², bevorzugt im Bereich von 0,3 bis 0,7 N/mm² auf. Bevorzugt liegt die Dichte, im Bereich von 25 bis 50 g/l und die Dicke im Bereich von 20 bis 200 mm. Der Querschnitt beträgt in der Regel mindestens 50 cm², bevorzugt 100 bis 2000 cm².

Der die Beschichtung bildende Polymerfilm enthält in der Regel ein amorphes oder teilkristallines, thermoplastisches Polymer. Es werden Styrol enthaltende Polymere mit einem Styrolgehalt im Bereich von 10 bis 90 Gew.-%, nämlich Styrol-Acrylate und Styrol-Butadien-Copolymere als filmbildende Polymere für die Beschichtung eingesetzt.

Schichtdicken im Bereich von 1 µm bis 100 µm, insbesondere 5 µm bis 100 µm sind für die erfindungsgemäße Funktion der Beschichtung ausreichend.

Die Beschichtung der Schaumstoffplatte kann beispielsweise durch Auftragen einer Polymerlösung oder Polymerdispersion auf eine oder mehrere Plattenoberflächen und anschließendes Abtrocknen erfolgen. Bevorzugt wird die Schaumstoffplatte beidseitig, also auf den beiden gegenüberliegenden großflächigen Plattenoberflächen beschichtet. Hierbei können die Beschichtungen auch verschiedene Schichtdicken und/oder Zusammensetzungen aufweisen. Beispielsweise kann eine Beschichtung für die Haftung auf Mörtel und die andere Beschichtung für hohe Reflexion optimiert werden.

Als Verfahren zum Auftragen der Polymerlösung oder Polymerdispersion eigen sich Sprühen, Streichen, Tauchen oder Bedrucken. Der Auftrag kann flächendeckend oder in Mustern, z. B. durch Flexodruck erfolgen. Die aufzutragenden Menge richtet sich nach der Art des Polymerfilmes, des aufgetragenen Musters und dem Haftgrund. Bei Verwendung von Polymerdispersionen ist in der Regel eine Auftragsmenge von 1 bis 50 g/m², bevorzugt von 3 bis 30 g/m², besonders bevorzugt von 5 bis 20 g/m² für eine zufriedenstellende Haftung ausreichend.

Geeignete Polymerdispersionen zur Beschichtung sind solche, die üblicherweise zur Modifizierung mineralischer Baustoffe oder als Fliesenkleber eingesetzt werden. Sie können durch Emulsionspolymerisation von ethylenisch ungesättigten Monomeren, wie Styrol, Butadien oder Acrylaten erhalten werden. Bevorzugt werden Styrol-Acrylat-Dispersionen und Styrol-Butadien-Dispersionen verwendet.

Die Styrol-Butadien-Dispersionen haben vorzugsweise eine Monomerzusammensetzung von ca 70 Gew.-% Styrol und ca 30 Gew-% Butadien und könne gegebenenfalls noch gering Mengen, z. b. 1 bis 5 Gew.%, bezogen auf alle Monomeren, Acrylsäure, Methacrylsäure , Acrylamid oder Methacrylamid enthalten. Geeignete Dispersionen sind beispielsweise in der EP-A 754657 beschrieben.

Bevorzugt sind Ammoniak-freie Polymerdispersionen, die ein Copolymerisat enthalten, das als Monomere 55 - 80 Gew.-% wenigstens eines Esters der Acrylsäure mit C2-C12-Alkanolen, wie Ethylacrylat, n-Butylacrylat oder 2-Ethylhexylacrylat, 12 - 35 Gew.-% wenigstens eines vinylaromatischen Monomers, wie Styrol und/oder wenigstens eines Esters der Methacrylsäure mit C₁-C₄-Alkanolen, wie Methylacrylat, 3-12 Gew.-% wenigstens eines Monoesters eines C₂-C₆-Alkandiols, wie 2-Hydroxyethylacrylat und 0,1 bis 1 Gew.% wenigstens einer ethylenisch ungesättigen Carbonsäure, wie Acrylsäure oder Methacrylsäure einpolymerisiert enthalten. Die Copolymerisate können gegebenenfalls noch geringe Mengen Monomere mit Harnstoff- oder Thioharnstoffgruppen, wie Ureidoethyenmethacrylat oder hydrolysierbaren Siliziumgruppen, wie 3-Methacryloxypropyltrimethyoxysilan enthalten. Geeignete Polymerdispersionen und deren Herstellungsverfahren sind z. B in EP-A 1180530, EP 1182179 beschrieben.

Die erfindungsgemäßen Pigmente und gegebenenfalls zusätzlichen Füllstoffe können den Polymerdispersionen vor dem Auftragen, vorteilhaft in Form von Pigmentdispersionen, zugegeben werden. Des weiteren können Flammschutzmittel, wie halogenfreie oder halogenhaltige Verbindungen, beispielsweise Melamin, Aluminiumoxidhydrate, Ammoniumpolyphosphate, Arylphosphate oder bromierte Verbindungen wie HBCD oder Infrarot (IR)- absorbierende Feststoffe, wie Graphit, Ruß oder Aluminium zugegeben werden. Auf diese Weise lassen sich die physikalischen und dekorativen Eigenschaften der Schaumstoffplatten beeinflussen.

Es ist auch möglich, die Pigmente und Füllstoffe nach dem Auftragen der Polymerdispersion auf die noch nicht getrocknete Oberfläche zu verteilen oder eine Polymerdispersion zu verwenden, aus der die Füllstoffe durch Kristallisation oder Fällung während der Filmbildung gebildet werden. Die gröberen Füllstoffe mit einer Partikelgröße von mindestens 50 µm bewirken aufgrund der Teilchengröße eine Strukturierung und Erhöhung der Rauhigkeit der Oberfläche der Beschichtung. Dadurch wird die Haftung des Mörtels weiter verbessert.

Die erfindungsgemäß beschichteten Schaumstoffplatten zeigen eine deutlich geringere Erhöhung der Oberflächentemperatur und eine geringere Verformung bei einseitiger Bestrahlung.

Nach dem Abtrocknen können die beschichteten Platten zur Lagerung ohne signifikantes Verkleben gestapelt werden. Bevorzugt werden die Schaumstoffplatten als Wärmedämmstoff für das Bauwesen eingesetzt.

### Beispiele:

Für die Beispiele wurde eine extrudierte Polystyrol-Hartschaumstoffplatte (XPS) mit einer Dichte von 33 kg/m3 und den Maßen 1250mm*600mm*100 mm verwendet. Die XPS-Platte enthielt 1 Gew.-% Graphit und wurde analog Beispiel 2 der EP-A 863 175 hergestellt.

Nach dem Abtrocknen der Polymerdispersion wurden die Verformung der beschichteten und unbeschichteten Platten bei einseitiger Erwärmung in Anlehnung an DIN 53 431 bestimmt. Hierzu wurden die zu prüfenden Platten waagerecht auf eine Temperierplatte gelegt und mittels IR-Lichtquellen (4 x Osram 375 W) im Abstand von 675 mm fünf Stunden lang bestrahlt. Anschließend wurden die Oberflächentemperatur und die durch die Verwölbung hervorgerufene Höhenänderung im Mittelpunkt der Platte bestimmt.

### Beispiel 1

176,7 g einer 40 Gew.-%igen wässrigen Styrol-Acrylat-Dispersion (analog D1 nach EP-A 1 108 530) wurde mit 34,2 g Titandioxid Rutil-Paste in wässriger Dispersion (Luconyl Weiss 0022 der BASF Aktiengesellschaft, Feststoffgehalt 60 Gew.-%) mittels eines Vollradrührers innerhalb von einer Minute bei 1000 Upm homogenisiert und beidseitig mit einer Farbrolle auf die XPS-Platte wurde aufgetragen. Das Beschichtungsgewicht nach Trocknung betrug 8 g/m²(Schichtdicke ca. 8 µm).

### Beispiel 2

166,7 g einer 40 Gew.-%igen wässrigen Styrol-Acrylat-Dispersion (analog D1 nach EP-A 1 108 530) wurde mit 41,7 g Titandioxid Rutil-Paste in wässriger Dispersion (Luconyl Weiss 0022 der BASF Aktiengesellschaft, Feststoffgehalt 60 Gew.-%) mittels eines Vollradrührers innerhalb von einer Minute bei 1000 Upm homogenisiert und beidseitig mit einer Farbrolle auf die XPS-Platte wurde aufgetragen. Das Beschichtungsgewicht nach Trocknung betrug 8g/m2.

### Vergleichsversuch

### XPS-Platte ohne Beschichtung.

**Tabelle 1: Oberflächentemperatur (OT) und Höhenänderung (H) bei einseitiger Erwärmung:**

| | Oberflächentemp. [°C] | Höhenänderung [mm] |
|---|---|---|
| Vergleichsversuch | 68,0 | 4,1 |
| Beispiel 1 | 57,5 | 2,6 |
| Beispiel 2 | 55,5 | 2,4 |

## Patentansprüche

1. Schaumstoffplatte mit einer Beschichtung auf mindestens einer Plattenoberfläche, **dadurch gekennzeichnet, dass** die Beschichtung eine Schichtdicke im Bereich von 1 bis 100 µm und einen Polymerfilm aus Styrol-Acrylaten oder Styrol-Butadien-copolymeren mit einem Styrolgehalt im Bereich von 10 bis 90 Gew.-% aufweist, sowie 5 bis 30 Gew.-%, bezogen auf die Beschichtung, Pigmente mit hohem Streu- und/oder Reflexionsvermögen und einer mittleren Teilchengröße im Bereich von 0,1 bis 50 µm, ausgewählt aus der Gruppe Titandioxid, Zinksulfid, Zinkoxid, Antimontrioxid, Bleicarbonat, Bleisulfat, Lithophone, Zirkoniumdioxid, Calciumcarbonat, Talkum, Bariumsulfat, Strontiumsulfat, Kaoline, Silikate, Glaspartikel, organische Hohlteilchen oder Mischungen davon, enthält.

2. Schaumstoffplatte nach Anspruch 1, **dadurch gekennzeichnet, dass** die Pigmente eine mittlere Teilchengröße im Bereich von 0,32 bis 0,45 µm aufweisen.

3. Schaumstoffplatte nach Ansprüch 1 oder 2, **dadurch gekennzeichnet, dass** die Haftzugfestigkeit zwischen einem Unterputz und der mit der Beschichtung versehenen Plattenoberfläche mindesten 50 kPa, gemessen nach DIN EN 1607 an Proben nach DIN EN13494, beträgt.

4. Schaumstoffplatte nach einem der Ansprüche 1 bis 3, **dadurch gekennzeichnet, dass** sie aus einem Extrusionsschaum auf Basis eines Styrolpolymeren (XPS) besteht.

5. Schaumstoffplatte nach einem der Ansprüche 1 bis 3, **dadurch gekennzeichnet, dass** sie aus einem Partikelschaum aus Polystyrol oder Polyolefin besteht.

6. Verfahren zur Herstellung einer Schaumstoffplatte gemäß einem der Ansprüche 1 bis 5, **dadurch gekennzeichnet, dass** die Beschichtung der Schaumstoffplatte durch Auftragen einer Polymerdispersion, welcher die Pigmente in Form einer Pigmentdispersion zugegeben wurden, auf eine oder mehrere Plattenoberflächen und anschließendem Abtrocknen erfolgt.

7. Verfahren nach Anspruch 6, **dadurch gekennzeichnet, dass** als Polymerdispersion eine Styrol-Acrylat-Dispersion oder Styrol-Butadien-Dispersion verwendet wird.

8. Verwendung der Schaumstoffplatten nach einem der Ansprüche 1 bis 5 als Wärmedämmstoff für das Bauwesen.

## Claims

1. A foam sheet with a coating on at least one sheet surface, wherein the coating has a layer thickness in the range from 1 to 100 µm and comprises a polymer film of styrene-acrylates or styrene-butadiene copolymers having a styrene content in the range from 10 to 90% by weight, and 5 to 30% by weight, based on the coating, of pigments with high scattering capability and/or high reflection capability and with an average particle size in the range from 0.1 to 50 µm, selected from the group consisting of titanium dioxide, zinc sulfide, zinc oxide, antimony trioxide, lead carbonate, lead sulfate, lithopones, zirconium dioxide, calcium carbonate, talc, barium sulfate, strontium sulfate, kaolins, silicates, glass particles, hollow organic particles, or a mixture thereof.

2. The foam sheet according to claim 1, wherein the pigments have an average particle size in the range from 0.32 to 0.45 µm.

3. The foam sheet according to claim 1 or 2, wherein the tensile bond strength between an undercoat of render and the sheet surface provided with the coating is at least 50 kPa, measured to DIN EN 1607 on specimens to DIN EN13494.

4. The foam sheet according to any of claims 1 to 3, which is composed of an extruded foam based on a styrene polymer (XPS).

5. The foam sheet according to any of claims 1 to 3, which is composed of a molded foam composed of polystyrene or of polyolefin.

6. A process for production of a form sheet according to any of claims 1 to 5, which comprises coating the foam sheet by applying a polymer dispersion to which the pigments have been added in the form of a pigment dispersion, to one or more sheet surfaces and then carrying out drying.

7. The process according to claim 6, using as polymer dispersion a styrene-acrylate dispersion or styrene-butadiene dispersion.

8. The use of the foam sheet according to any of claims 1 to 5 as thermal insulation material for the construction industry.

## Revendications

1. Plaque de mousse comportant un revêtement sur au moins une surface de la plaque, **caractérisée en ce que** le revêtement présente une épaisseur de couche dans la plage de 1 à 100 µm et comporte un film en polymère à base de styrène-acrylates ou de copolymères styrène-butadiène ayant une teneur en styrène dans la plage de 10 à 90 % en poids, ainsi que 5 à 30 % en poids, par rapport au revêtement, de pigments à grand pouvoir de diffusion et/ou de réflexion et ayant une taille moyenne de particule dans la plage de 0,1 à 50 µm, choisis dans le groupe constitué par le dioxyde de titane, le sulfure de zinc, l'oxyde de zinc, le trioxyde d'antimoine, le carbonate de plomb, le sulfate de plomb, le lithopone, le dioxyde de zirconium, le carbonate de calcium, le talc, le sulfate de baryum, le sulfate de strontium, les kaolins, les silicates, des particules de verre, des particules creuses organiques ou des mélanges de ceux-ci.

2. Plaque de mousse selon la revendication 1, **caractérisée en ce que** les pigments ont une taille moyenne de particule dans la plage de 0,32 à 0,45 µm.

3. Plaque de mousse selon la revendication 1 ou 2, **caractérisée en ce que** la résistance à la traction d'éléments adhérents entre un crépi sous-jacent et la surface de la plaque munie du revêtement est d'au moins 50 kPa, mesurée selon DIN EN 1607 sur des échantillons selon DIN EN 13494.

4. Plaque de mousse selon l'une quelconque des revendications 1 à 3, **caractérisée en ce qu'**elle consiste en une mousse extrudée à base d'un polymère de styrène (XPS).

5. Plaque de mousse selon l'une quelconque des revendications 1 à 3, **caractérisée en ce qu'**elle consiste en une mousse particulaire à base de polystyrène ou de polyoléfine.

6. Procédé pour la production d'une plaque de mousse selon l'une quelconque des revendications 1 à 5, **caractérisé en ce que** le revêtement de la plaque de mousse s'effectue par application d'une dispersion de polymère, à laquelle ont été ajoutés les pigments sous forme d'une dispersion de pigments, sur une ou plusieurs surfaces de la plaque, et séchage subséquent.

7. Procédé selon la revendication 6, **caractérisé en ce qu'**on utilise comme dispersion de polymère une dispersion de styrène-acrylate ou une dispersion de styrène-butadiène.

8. Utilisation des plaques de mousse selon l'une quelconque des revendications 1 à 5, en tant qu'isolant thermique pour le bâtiment.
